# NEUE EUROPÄISCHE PATENTSCHRIFT

(11) **EP 2 355 988 B2**
(45) Veröffentlichungstag und Bekanntmachung des Hinweises auf die Entscheidung über den Einspruch: **27.04.2016**
(45) Hinweis auf die Patenterteilung: 29.05.2013
(21) Anmeldenummer: 09801927.6
(22) Anmeldetag: 01.12.2009
(51) Int. Cl.: B60G 9/00, B60G 7/00, B60B 35/00, B60B 35/08, B60G 11/28

(54) **ACHSAUFHÄNGUNG FÜR EINE FAHRZEUGACHSE**
AXLE SUSPENSION FOR A VEHICLE AXLE
SUSPENSION D'ESSIEU POUR UN ESSIEU DE VÉHICULE

(30) Priorität: 09.12.2008 DE 102008061190
(43) Veröffentlichungstag der Anmeldung: 17.08.2011
(60) Teilanmeldung: 13158680.2
(73) Patentinhaber: BPW Bergische Achsen KG, 51674 Wiehl (DE)
(72) Erfinder: KOPPLOW, Hans-Werner, 51588 Nümbrecht (DE); BORLINGHAUS, Thomas, 51709 Marienheide (DE); MICHELS, Manfred, 51067 Köln (DE); GMEINER, Sven, 51709 Marienheide (DE); SAGER, Frank, 51427 Bergisch Gladbach (DE)
(74) Vertreter: Bungartz Christophersen Partnerschaft mbB Patentanwälte
(86) Internationale Anmeldenummer: PCT/DE2009/001690
(87) Internationale Veröffentlichungsnummer: WO 2010/066232

(56) Entgegenhaltungen:
- EP-A1- 1 574 366
- EP-A1- 1 728 654
- EP-A2- 1 145 878
- EP-B1- 0 742 113
- WO-A1-98/38074
- WO-A1-03/018334
- WO-A1-2009/014423
- WO-A1-2009/014423
- WO-A2-2004/054825
- DE-A1- 10 054 839
- DE-A1- 10 110 495
- DE-A1- 10 118 696
- US-A- 3 251 608
- US-A- 3 434 707
- US-A- 5 058 916
- US-A1- 2003 111 143
- US-A1- 2005 253 351
- US-A1- 2006 163 834
- US-B1- 6 241 266
- US-B1- 6 406 044
- US-B1- 6 412 789
- US-B2- 7 077 413

## Beschreibung

Die Erfindung betrifft eine Achsaufhängung für eine Fahrzeugachse, mit einem Achskörper und den Achskörper an seinen beiden Enden kreuzenden Achslenkern, die gegenüber dem Fahrzeug abgestützt sind, wobei sich jeder Achslenker aus mindestens einem in Fahrtrichtung vorderen und mindestens einem in Fahrtrichtung hinteren Lenkerabschnitt zusammensetzt, an beiden Lenkerabschnitten Schalen angeformt sind, deren Innenseiten sich so in Achsrichtung erstrecken, dass sie gegen einen Längsabschnitt des Achskörpers anliegen, und die Lenkerabschnitte durch Zugelemente miteinander verbunden sind, die sich auf zwei unterschiedlichen Seiten des Achskörpers quer zum Achskörper erstrecken und die Schalen unter Zwischenlage des Achskörpers gegeneinander verspannen.

Eine Achsaufhängung mit einigen dieser Merkmale ist aus der WO 2004/054825 A2 bekannt.

Aus der nach Art. 54 (3) EPÜ zum Stand der Technik zählenden WO 2009/014423 A1 ist eine Achsaufhängung mit einem in Fahrtrichtung vorderen und einem in Fahrtrichtung hinteren Lenkerabschnitt bekannt, bei der die Lenkerabschnitte durch Zugelemente miteinander verbunden sind, die sich auf zwei unterschiedlichen Seiten des Achskörpers quer zum Achskörper erstrecken. Durch die Zugelemente werden an den Lenkerabschnitten angeformte Schalen unter Zwischenlage des Achskörpers gegeneinander verspannt.

Mit der Erfindung soll eine gegenüber dem Stand der Technik verbesserte Achsaufhängung geschaffen werden, die einfach und aus nur wenigen Einzelteilen montierbar ist.

Zur Lösung wird eine Achsaufhängung mit den Merkmalen des Anspruchs 1 vorgeschlagen.

Bevorzugte Ausgestaltungen der Achsaufhängung sind in den Unteransprüchen angegeben.

Gemäß einer Ausgestaltung weist jede Schale mindestens eine erste und mindestens eine zweite ebene Innenfläche auf, wobei die erste und die zweite Innenfläche im Winkel zueinander stehen. Vorzugsweise weisen die Schalen, in Achsrichtung betrachtet, eine V-förmige Innenkontur mit einem Innenwinkel von 90° oder geringfügig weniger als 90° auf. Mit einer weiteren Ausgestaltung wird eine im Eckenbereich des Innenwinkels ausgebildete Zahnstruktur vorgeschlagen. Diese gräbt sich beim Anziehen der Zugelemente in das Material des Achskörpers ein, wodurch es zu einem Formschluss zwischen Achslenker und Achskörper kommt, und zwar auch in Achsrichtung.

Mit einer weiteren Ausgestaltung wird vorgeschlagen, dass zumindest der in Fahrtrichtung vordere Lenkerabschnitt ein Gussteil ist. Vorzugsweise ist auch der in Fahrtrichtung hintere Lenkerabschnitt ein Gussteil.

Mit einer weiteren Ausgestaltung wird vorgeschlagen, dass die Zugelemente Bestandteil eines nach Art eines U-Bügels gestalteten Gewindebügels sind, der mit einem Bügelabschnitt um ein an dem einen der beiden Lenkerabschnitte angeordnetes Widerlager herumgeführt ist, wobei sich die Zugelemente parallel zum Verlauf des Achslenkers im Bereich des Achsköpers erstrekken. Vorzugsweise dient als Widerlager eine von der Ober- und / oder Unterseite des Lenkerabschnitts hervorstehenden Nase, die entlang ihrer Basis mit einer zu der Biegung des Bügelabschnitts korrespondierenden Rille versehen ist.

Mit einer alternativen Ausgestaltung wird vorgeschlagen, dass die Zugelemente Bestandteil eines um eine der beiden Schalen herum geführten Gewindebügels sind, dessen beiden freien Enden gegen die andere der beiden Schalen verschraubt sind. Vorzugsweise ist derGewindebügellängsderHerumführung um die Schale aufeinander folgend miteiner 45°-, einer 90°- und wieder einer 45°-Abknickung versehen.

Mit einer weiteren Ausgestaltung wird vorgeschlagen, dass der Gewindebügel außen um die an dem vorderen Lenkerabschnitt angeformte Schale herum geführt ist.

Mit einer weiteren Ausgestaltung wird vorgeschlagen, dass auf die freien Enden der Zugelemente Gewindemuttern aufgeschraubt sind, die sich gegen die an dem hinteren Lenkerabschnitt angeformte Schale abstützen.

Weitere Vorteile und Einzelheiten ergeben sich aus der nachfolgenden Beschreibung eines Ausführungsbeispieles einer Achsaufhängung, welche auf der Zeichnung dargestellt ist. Darin zeigen:
- Fig. 1: in einer perspektivischen Ansicht eine erste Ausführungsform einer Achsaufhängung für eine luftgefederte Fahrzeugachse;
- Fig. 2: die Achsaufhängung aus einer anderen Perspektive;
- Fig. 3: in perspektivischer Darstellung einen zweiteiligen Achslenker der Achsaufhängung, wobei aus Gründen der besseren Darstellbarkeit der Achskörper nicht wiedergegeben ist;
- Fig. 4: in einer perspektivischen Explosionsdarstellung die Einzelteile der Achsaufhängung,
- Fig. 5: in einer Seitenansicht Einzelheiten der Gestaltung des zweiteiligen Achslenkers, insbesondere dessen den Achskörper umschließende Innenflächen;
- Fig. 6: in einer Seitenansicht eine zweite Ausführungsform einer Achsaufhänguhg für eine luftgefederte Fahrzeugachse;
- Fig. 7: die Achsaufhängung nach Fig. 6 in perspektivischer Darstellung und
- Fig. 8: in ebenfalls perspektivischer Darstellung den Anbindungsbereich zwischen Achslenker und der Fahrzeugachse in vergrößerter Wiedergabe.

Die auf der Zeichnung dargestellte Achsaufhängung findet Anwendung vor allem für Fahrzeugachsen mit durchgehendem Achskörper. Derartige Fahrzeugachsen kommen vor allem im Schwerlastbereich und insbesondere bei Lkw-Anhängern und -aufliegern zum Einsatz, da die Achsen für hohe Transportgewichte und Belastungen im Straßenbetrieb ausgelegt sind.

Unter Längsträgern eines hier nicht dargestellten Fahrzeugchassis ist auf jeder Fahrzeugseite eine Lenkerstütze 1 befestigt. Diese nimmt ein Schwenklager 2 für die Achsaufhängung auf. Zur Führung des von einer Fahrzeugseite zur anderen Fahrzeugseite starr durchgehenden Achskörpers 3 dient auf jeder Fahrzeugseite ein Achslenker 10. Der Achslenker 10 ist an seinem vorderen Ende mit einem einstückig angegossenen Lenkerauge 2 versehen, welches Bestandteil des Schwenklagers ist, um so mittels eines Bolzens 2a den Achslenker 10 vertikal schwenkbar an der Lenkerstütze 1 zu halten. Bestandteil des Schwenklagers 2 kann ein Gummi-der Elastomerelement um den Bolzen 2a herum sein, welches ein gewisses Maß an radialer Beweglichkeit in dem Schwenklager zulässt. Derartige elastische Elemente sind bekannt.

In Fahrtrichtung hinten ist an dem Achslenker 10 eine Auflagefläche 13 für eine Luftfeder 14 ausgebildet. Die Luftfeder 14 stützt sich mit ihrer oberen Abschlussplatte 15 von unten gegen den entsprechenden Längsträger des Fahrzeugchassis ab.

Der Achslenker 10 ist zweiteilig gestaltet. Er setzt sich zusammen aus einem in Fahrtrichtung vorderen Lenkerabschnitt 11, der bogenförmig nach oben gewölbt gestaltet ist, sowie einem in Fahrtrichtung hinteren Lenkerabschnitte 12, der bogenförmig nach unten gewölbt ist. An dem hinteren Lenkerabschnitt 12 ist eine Auflagefläche 13 für die Luftfeder 14 angeformt. An dem vorderen Lenkerabschnitt 11 ist ein Befestigungszapfen oder ein Befestigungsauge 18 für einen Stoßdämpfer 19 angeformt.

Der vordere Lenkerabschnitt 11 erstreckt sich von dem Lagerauge des Schwenklagers 2 bis zu dem Achskörper 3 und läuft mit seinem hinteren Ende nach schräg unten aus. Der hintere Lenkerabschnitt 12 erstreckt sich von dem Achskörper 3 bis zu der Auflagefläche 13 für die Luftfeder 14. Er läuft mit seinem vorderen Ende nach schräg oben aus. Diese Zweiteiligkeit des Achslenkers 10 ist von Vorteil, da durch Auswahl von Lenkerabschnitten 11, 12 in geeigneter Größe die fahrzeugspezifischen Abstände zwischen Schwenklager 2, Achskörper 3 und Luftfeder 14 individuell, d. h. kundenspezifisch, realisierbar sind.

Der vordere Lenkerabschnitt 11 besteht aus Metallguss, vorzugsweise einem Sphärostahlguss. Vorzugsweise besteht auch der hintere Lenkerabschnitt 12 aus Metallguss, vorzugsweise einem Sphärostahlguss.

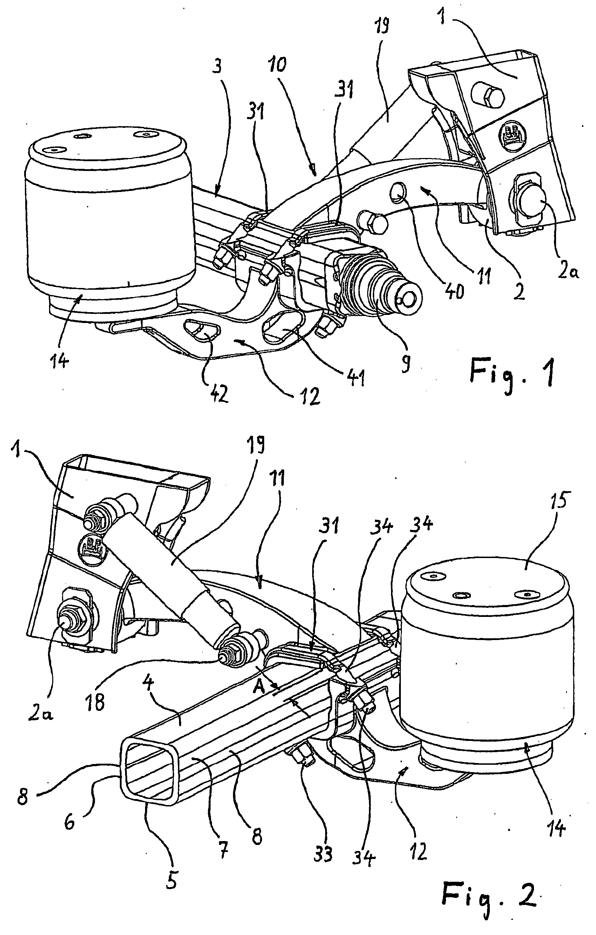

Gemäß Fig. 2 ist der Achskörper 3 auf dem größten Teil seiner Länge als ein Achsrohr gestaltet. Dieses weist einen in etwa quadratischen Querschnitt auf, so dass sich als Außenflächen des Achsrohrs eine Oberseite4, eine Unterseite 5, eine in Fahrtrichtung nach vorne weisende Seite 6 und eine nach fahrzeughinten weisende Seite 7 ergeben. Zwischen diesen Seiten 4, 5, 6, 7 weist der Achsrohrquerschnitt Rundungen in Viertelkreisform auf.

Das Achsrohr ist durch Schweißen aus einer oberen und einer unteren Halbschale zusammengefügt, wodurch sich im Verbindungsbereich dieser Halbschalen Schweißnähte 8 ergeben. Am fertigen Achsrohr führen die in der neutralen Biegelinie angeordneten Schweißnähte 8 zu einer langgestreckten Erhöhung auf den beiden Seiten 6, 7 des Achsrohrs. Bestandteil des Achskörpers 3 sind ferner Achsschenkel 9, welche auf die Enden desAchsrohrs aufgeschweißt sind. Auf jedem Achsschenkel 9 ist das jeweilige Fahrzeugrad drehbar gelagert.

An dem vorderen Lenkerabschnitt 11 des zweiteiligen Achsienkers 10 ist ein Befestigungsauge oder ein Befestigungszapfen 18 zur Abstützung eines Stoßdämpfers 19 angegossen. Mit seinem anderen Ende ist der Stoßdämpfer 19 gelenkig im oberen Bereich der starren Lenkerstütze 1 abgestützt.

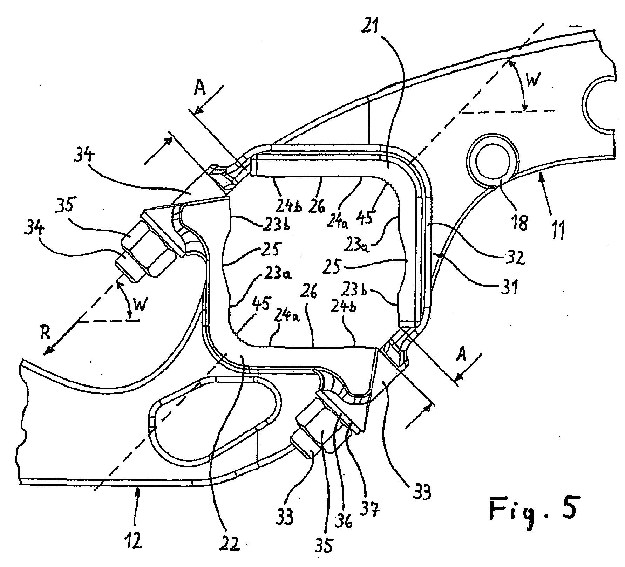

Die Einbindung des Achskörpers 3 in den beiden Achslenkern 10 erfolgt durch formschlüssiges Einklemmen des Achskörpers 3 zwischen den beiden Lenkerabschnitten 11, 12. Hierzu ist der vordere Lenkerabschnitt 11 mit einer im Querschnitt V-förmigen Schale 21, und auch der hintere Lenkerabschnitt 12 mit einer im Querschnitt V-förmigen Schale 22 versehen. Die Schalen 21, 22 sind einstückiger Bestandteil der gegossenen Lenkerabschnitte 11, 12. Für einen optimalen Kraftverlauf im Achslenker 10 ist die Gussgestaltung so, dass der Lenkerabschnitt 11 nach schräg unten auf die Schale 21, und der Lenkerabschnitt 12 nach schräg oben auf die Schale 22 stößt. Mit den Innenseiten ihrer Schalen 21, 22 stützen sich die Lenkerabschnitte 11, 12 flächig gegen die entsprechenden Seiten 4, 5, 6, 7 des Achskörpers 3 ab, wobei die erforderliche Klemmkraft durch Zugelemente erreicht wird, welche die eine Schale 21 unter Zwischenlage des Achskörpers 3 gegen die andere Schale 22 verspannen. Diese Verspannung erfolgt unter einem schrägen Winkel W zur Horizontalen, wie Fig. 5 zeigt.

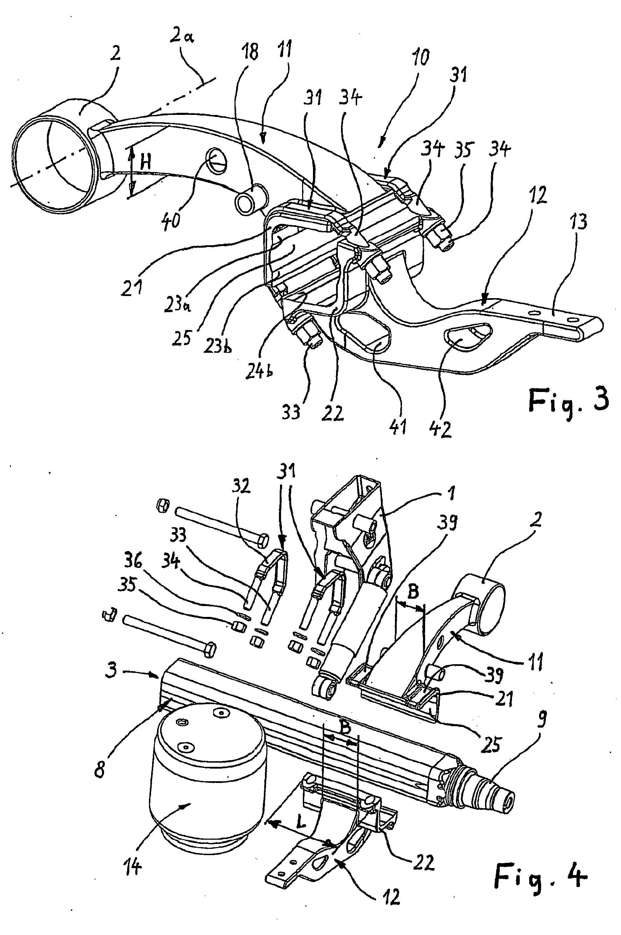

Bei der Ausführungsform nach den Fign. 1 bis 5 weist jede Schale 21, 22, in Achsrichtung gesehen, eine Länge L (Fig. 4) auf, die deutlich größer ist, als die sonstige Breite B des jeweiligen Lenkerabschnitts 11, 12. Auf diese Weise ergibt sich in Achsrichtung eine lange Abstützung der Schalen 21,22 auf dem entsprechenden Längsabschnitt des Achskörpers 3.

Gemäß Fig. 5 istweistjede der beiden Schalen 21, 22, in Achsrichtung betrachtet, mindestens eine erste ebene Innenfläche und mindestens eine hierzu im Rechten Winkel angeordnete zweite ebene Innenfläche auf. Es sind zwei erste flache Innenflächen 23a, 23b, die in derselben Ebene liegen, sowie zwei zu diesen ersten Innenflächen 23a, 23b rechtwinklig angeordnete zweite flache Innenflächen 24a, 24b, die in derselben Ebene liegen, vorhanden. Der genannte Winkel zueinander beträgt allerdings vorzugsweise etwas weniger als 90°, z. B. 88 oder 89°. Infolge des nicht ganz rechten Innenwinkels kommt es beim Anziehen der Zugelemente 31 unter Erhöhung der Klemmspannung zu einem Anschmiegen der flachen Innenflächen 23a, 23b und 24a, 24b an den ebenfalls flachen Seiten 4, 5, 6, 7 des quadratischen Achskörpers 3, indem die rechtwinklige Kontur der Schalen 21, 22 in montiertem Zustand geringfügig aufgespreizt wird. Die Innenflächen 23a, 23b, 24a, 24b haben dann einen flächigen und spielfreien Kontakt zu den Außenflächen des Achskörpers 3. Zu der flächigen und spielfreien Anlage trägt bei, dass die Schalen 21,22 dort, wo sich bei der Montage die Schweißnähte 8 (Fig. 2) des Achsrohrs befinden, nämlich zwischen den in derselben Ebeneangeordneten Innenflächen 23a und 23b, mit ausreichend großen Ausnehmungen 25 versehen sind. Es kommt daher im Bereich der Ausnehmungen 25 zu keiner Berührung zwischen den Innenseiten der Schalen 21, 22 und dem Achskörper 3. Auch zwischen den beiden anderen Innenflächen 24a, 24b befindet sich eine vergleichbare Ausnehmung 26, die allerdings flacher aus-fälle.

Bei montierter Achsaufhängung stützt sich die Schale 21 des vorderen Lenkerabschnitts 11 zugleich gegen die Oberseite 4 und gegen die nach vorne weisende Seite 6 des Achskörpers ab. Hingegen stützt sich die andere Schale 22 zugleich gegen die Unterseite 5 und gegen die nach hinten weisende Seite 7 des Achskörpers ab. Die Innenseiten beider Schalen 21, 22 zusammen umschließen daher den Achskörper 3 nahezu über seinen gesamten Umfang. Allerdings verbleibt jeweils ein gewisser nicht umschlossener Umfangsabstand A (Fig. 2, Fig. 5) zwischen den Außenrändern der einen Schale 21 und den benachbarten Außenrändern der anderen Schale 22. Der Abstand A ist erforderlich, damit es unter keinen Umständen und auch nicht bei starker Torsionsbelastung der Achsaufhängung zu einer Berührung zwischen den beiden Schalen 21, 22 kommt.

Zum Toleranzausgleich können zwischen den Innenseiten der Schalen 21, 22 und dem Achskörper 3 noch Zwischenlagen, z. B. dünne Bleche, angeordnet sein.

Im Folgenden wird erläutert, wie die Schalen 21, 22 der Lenkerabschnitte 11, 12 durch Zugelemente 33, 34, die sich auf zwei unterschiedlichen Seiten des Achskörpers 3 quer zum Achskörper erstrecken, gegeneinander gezogen werden können. Bei derAusführungsform nach den Fign. 1 bis 5 befindet sich sowohl auf der fahrzeuginneren, als auch auf der fahrzeügäußeren Seite des Achslenkers 10 jeweils ein Gewindebügel 31. Dieser besteht aus einem dreifach abgewinkelten Bügelabschnitt 32 und zwei geraden, zueinander parallelen Abschnitten 33, 34, welche als die eigentlichen Zugelemente die Zugkraft übertragen und im Bereich ihrer freien Enden als Gewindeabschnitte ausgebildet sind. Auf diese Gewindeabschnitte ist jeweils eine Gewindemutter 35 aufschraubbar.

Der Gewindebügel 31 ist so geformt, dass sein gebogener Abschnitt, also der Bügelabschnitt 32, von außen spielfrei an der Schale 21 des Lenkerabschnitts 11, um die der Bügelabschnitt 32 herum geführt ist, anliegt. Die Herumführung des Gewindebügels 31 erfolgt auf jenem in Achsrichtung betrachteten Längsabschnitt der Schale 21, auf welchem die Länge L der Schale 21 die Breite B des angrenzenden Lenkerabschnitts 11 überragt (Fig. 4). Die Außenseite der Schale 21 bildet daher das Widerlager beim Spannen des Bügels 31.

Entlang der Herumführung um die Schale 21 weist der Gewindebügel 31 aufeinander folgend eine 45°-, eine 90°- und wieder eine 45°-Abknickung auf. Die Herumführung längs des Bügelabschnitts 32 um die Schale 21 ist daher ebenso V-förmig, wie die V-förmige Außenkontur der Schale 21 beiderseits des Lenkerabschnitts 11.

Um ein Abrutschen der Gewindebügel 31 in Achsrichtung zu vermeiden, ist die Schale 21 mit einer kanalartigen Vertiefung 39 für einen zum Achsrohr hin versenkten Sitz des Bügelabschnitts 32 versehen. Über die Länge des Bügelabschnitts 32 weist der Gewindebügel 31 einen flacheren Querschnitt auf, als auf seiner übrigen Länge.

Die andere, d. h. die an dem hinteren Lenkerabschnitt 12 angeformte Schale 22 ist mit Hindurchführungen für die beiden als Zugelemente dienenden, geraden Abschnitte 33, 34 des Gewindebügels 31 sowie mit Druckflächen 37 versehen, an denen sich die aufgeschraubten Gewindemutter 35, ggf. unter Zwischenlage von Unterlegscheiben 36, abstützen.

Von Vorteil ist, dass sich im Bereich der Anbindung des Achskörpers 3 die Zugelemente 33, 34 längs, d. h. parallel, des Verlaufs des Achslenkers 10 erstrekken, wodurch sich die Enden der Zugelemente 33, 34 mit den dort aufgeschraubten Muttern 35 nach hinten und schräg unten erstrecken, wie in Fig. 5 mit dem Richtungspfeil R sowie dem Winkel W zur Horizontalen bezeichnet. Dies führt zu einer optimal geschützten Lage vor allem des oberen Zugelements 34 und seiner Mutter 35. Denn selbst im Fall einer extremen Einfederung des Achslenkers kommt es zu keinem Kontakt des Zugelements 34 bzw. der Mutter 35 mit den oberhalb angeordneten Chassisteilen des Fahrzeugs, wie dies zum Beispiel bei der Konstruktion gemäß der EP 1 088 687 A geschehen kann.

Sowohl der in Fahrtrichtung vordere Lenkerabschnitt 11, als auch der in Fahrtrichtung hintere Lenkerabschnitt 12 ist als in einem Gießprozess herstellbarer Hohlkörper gestaltet. Zur Verbesserung der Entfernung des Gießkerns beim Gießprozess können zusätzliche Öffnungen 40, 41, 42 vorhanden sein. Zur gießtechnischen Entformbarkeit des Lenkerabschnitts 11 trägt ferner bei, dass dessen Inneres auch zu dem Lenkerauge 2 sowie zu der Innenseite der Schale 21 hin offen ist

Zur Erzielung eines im Fahrbetrieb günstigen Verformungsverhaltens des vorderen Lenkerabschnitts istgemäß Fig. 4 der Querschnittdieses Lenkerabschnitts 11 hinter dem Lenkerauge 2 am geringsten, und nimmt dann nach hinten hin, d. h. in Richtung zu der Schale 21, kontinuierlich zu. Dies lässt sich erreichen, indem die Breite B dieses Lenkerabschnitts 11 hinter dem Lenkerauge 2 am geringsten ist und in Richtung zu der Schale 21 kontinuierlich zunimmt. Auch die Höhe H des Lenkerabschnitts11 ist hinter dem Lenkerauge 2 am geringsten, und nimmt dann in Richtung zu der Schale 21 kontinuierlich zu. An einer solchen Kontur kann sich eine Kolbenstange eines druckluftbetätigten Achslifts abstützen, um die Achse anzuheben.

Die beiden Schalen 21, 22 sind an ihren Innenseiten zur Verbesserung des Kraftschlusses zum Achskörper 3 jeweils mit Zahnstrukturen 45 versehen. Diese Strukturen befinden sich in dem gerundeten Eckenbereich zwischen der Innenfläche 23a und der dazu rechtwinkligen Innenfläche 24a. Die Strukturen 45 können gießtechnisch angeformt sein, werden jedoch vorzugsweise nachträglich durch Fräsbearbeitung hergestellt, ebenso wie auch die Innenflächen 23a, 23b, 24a, 24b vorzugsweise durch nachträgliche spanende Bearbeitung der Gussteile hergestellt werden.

Beim Verspannen der Schalen 21, 22 durch Anziehen der Gewindemuttern 35 der Gewindebügel 31 graben sich die im Bereich der Eckenrundung angeordneten Zahnstrukturen 45 in die korrespondierende Rundung auf der Außenseite des Achskörpers 3, welcheglatt ist, ein. Dadurch kommt es zu einem Formschluss nicht nur in Umfangsrichtung, sondern auch, wegen des Eingrabens der Strukturen 45 in die Oberfläche und das Material des Achskörpers, zu einem Formschluss in Achsrichtung.

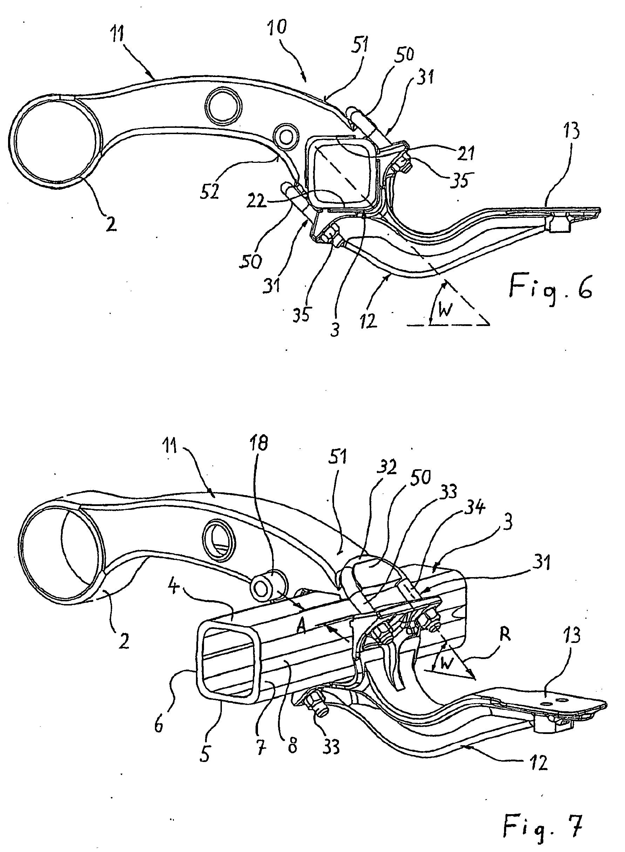

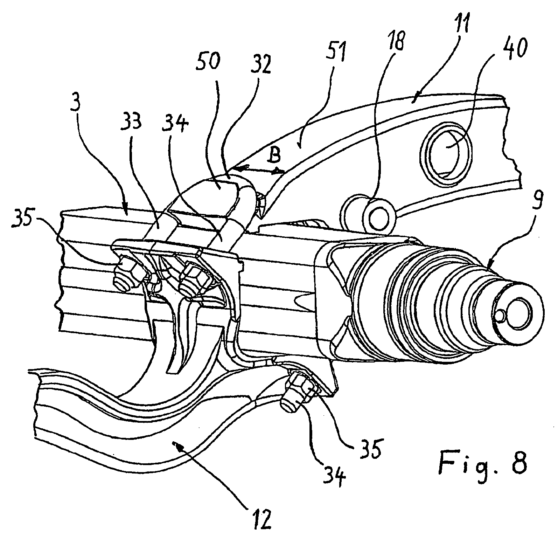

Die Fign. 6 - 8 zeigen eine zweite Ausführungsform einer erfindungsgemäßen Achsaufhängung, wobei dieselben oder funktionsgleiche Teile und Elemente mit denselben Bezugszeichen wie bei der ersten Ausführungsform nach den Figuren 1 - 5 versehen sind.

Die Ausführungsform nach den Fign. 6 - 8 unterscheidet sich von der ersten Ausführungsform in der Gestaltung der beiden Schalen 21, 22 und in der Anordnung der beiden Gewindebügel 31.

Die Schalen 21, 22 sind, in Längsrichtung des Achskörpers 3 betrachtet, nicht länger oder jedenfalls nicht wesentlich länger, als die Breite B der jeweiligen Lenkerabschnitte 11,12. DiefürdieAnlageandem rechteckigen Achskörper 3 wichtige, gewinkelte Schalenform wird im Wesentlichen dadurch erreicht, dass der vordere Lenkerabschnitt 11 an seinem hinteren Ende, und der hintere Lenkerabschnitt 12 an seinem vorderen Ende mit einer winkelförmigen Aussparung versehen ist, so dass sich in beiden Fällen eine im QuerschnittV-förmige Schale 21,22 ergibt. Die Schalen 21, 22 sind daher kürzer als bei der oben beschriebenen ersten Ausführungsform, gleichwohl sind sie einstückiger Bestandteil der Lenkerabschnitte 11, 12.

Für einen optimalen Kraftverlauf im Achslenker 10 ist die Gussgestaltung der Lenkerabschnitte 11, 12 wiederum so, dass das nach schräg unten gerichtete hintere Ende des Lenkerabschnitts 11 die Schale 21, und das nach schräg oben gerichtete vordere Ende des Lenkerabschnitts 12 die Schale 22 bildet. Mit den so gestalteten Innenflächen stützen sich die Lenkerabschnitte 11, 12 flächig gegen die entsprechenden Seiten 4, 5, 6, 7 des Achskörpers 3 ab, wobei wiederum die erforderliche Klemmkraft durch montierbare und demontierbare Zugelemente erreicht wird, welche die Schale 21 des vorderen Lenkerabschnitts 11 unter Zwischenlage des Achskörpers 3 gegen die Schale 22 des hinteren Lenkerabschnitts 12 verspannen. Diese Verspannung erfolgt unter einem schrägen Winkel W zur Horizontalen.

Das gegenseitige Verspannen der Lenkerabschnitte 11, 12 erfolgt mittels wiederum zweier Gewindebügel 31, bestehend jeweils aus einem gebogenen Bügelabschnitt 32 und zwei geraden, zueinander parallelen Abschnitten 33, 34, welche als die eigentlichen Zugelemente die Zugkraft übertragen. Im Bereich ihrer freien Enden sind die Abschnitte 33,34 mit Außengewinden versehen, auf die jeweils eine Gewindemutter 35 aufgeschraubt ist.

Der Bügelabschnitt 32 jedes Gewindebügels 31 ist um ein an dem vorderen Lenkerabschnitt 11 angeformtes Widerlager 50 herumgeführt. Bei dem Widerlager 50 handelt es sich um eine einstückig an dem Lenkerabschnitt 11 angeformte Nase, die mit einer zu der Biegung des Bügelabschnitts 32 korrespondierenden Rille versehen ist. Fig. 1 lässt erkennen, dass eine erste Nase, ohne den Lenkerquerschnitt zu schwächen, von der Oberseite 51 des Lenkerabschnitts 11, und eine zweite Nase von der Unterseite 52 des Lenkerabschnitts 11 hervorsteht. Jede Nase ist entlang ihrer Basis mit der zu der Biegung des Bügelabschnitts 32 korrespondierenden Rille versehen, so dass der Bügelabschnitt 32 formschlüssig in dieser Rille verläuft und nicht von der Nase, d. h. dem Widerlager 50 abspringen kann.

Auch bei dieser Ausgestaltung der Anordnung der Gewindebügel 31 wird erreicht, dass sich im Bereich der Anbindung des Achskörpers 3 die Zugelemente 33, 34 längs, d. h. parallel, des Verlaufs des Achslenkers 10 erstrecken, und sich die Enden der Zugelemente 33, 34 mit den dort aufgeschraubten Muttern 35 nach hinten und schräg unten erstrecken. Wiederum wird damit eine optimal geschützte Lage der Zugelemente erreicht, da es selbst im Fall einer extremen Einfederung des Achslenkers zu keinem Kontakt mit den oberhalb angeordneten Chassisteilen des Fahrzeugs kommt. Ebenso wie bei der ersten Ausführungsform wird eine im Vergleich zum Stand der Technik verbesserte Achsaufhängung geschaffen, die einfache montierbar ist und aus nur wenigen Einzelteilen besteht. Da die Lenkerabschnitte der Achsaufhängung durch separate Zugelemente 33, 34 verbunden sind, lässt sich die Achsaufhängung ferner mit geringem Aufwand und zerstörungsfrei wieder demontieren, etwa zu Reparaturzwecken.

### Bezugszeichenliste

- 1: Lenkerstütze
- 2: Lenkerauge
- 2a: Bolzen
- 3: Achskörper
- 4: Oberseite
- 5: Unterseite
- 6: nach vorn weisende Seite
- 7: nach hinten weisende Seite
- 8: Schweißnaht
- 9: Achsschenkel
- 10: Achslenker
- 11: vorderer Lenkerabschnitt
- 12: hinterer Lenkerabschnitt
- 13: Auflagefläche
- 14: Luftfeder
- 15: Abschlussplatte
- 18: Befestigungszapfen, -auge
- 19: Stoßdämpfer
- 21: Schale
- 22: Schale
- 23a: Innenfläche
- 23b: Innenfläche
- 24a: Innenfläche
- 24b: Innenfläche
- 25: Ausnehmung
- 26: Ausnehmung
- 31: Gewindebügel
- 32: Bügelabschnitt
- 33: Zugelement, Gewindeabschnitt
- 34: Zugelement, Gewindeabschnitt
- 35: Gewindemutter
- 36: Unterlegscheibe
- 37: Druckfläche
- 39: Einsenkung
- 40: Öffnung
- 41: Öffnung
- 42: Öffnung
- 45: Zahnstruktur
- 50: Widerlager
- 51: Oberseite
- 52: Unterseite

- A: Umfangsabstand
- B: Breite
- H: Höhe
- L: Länge
- R: Richtung
- W: Winkel

## Patentansprüche

1. Achsaufhängung für eine luftgefederte Fahrzeugachse, mit einem Achskörper (3) und den Achskörper (3) an seinen beiden Enden kreuzenden Achslenkern (10), die gegenüber dem Fahrzeug abgestützt sind und an denen in Fahrtrichtung hinten eine Auflagefläche (13) für eine Luftfeder (14) ausgebildet ist, wobei sich jeder Achslenker (10) aus mindestens einem in Fahrtrichtung vorderen (11) und mindestens einem in Fahrtrichtung hinteren (12) Lenkerabschnitt zusammensetzt, an beiden Lenkerabschnitten (11, 12) Schalen (21, 22) angeformt sind, deren Innenseiten sich so in Achsrichtung erstrecken, dass sie gegen einen Längsabschnitt des Achskörpers (3) anliegen, und die Lenkerabschnitte (11, 12) durch Zugelemente (33, 34) miteinander verbunden sind, die sich auf zwei unterschiedlichen Seiten des Achskörpers (3) quer zum Achskörper erstrecken und die Schalen (21, 22) unter Zwischenlage des Achskörpers (3) gegeneinander verspannen, **dadurch gekennzeichnet, dass** die Verspannung der Schalen (21, 22) unter einem schrägen Winkel (W) zur Horizontalen erfolgt, und sich freie Enden der Zugelemente (33, 34) nach hinten und schräg unten erstrecken.

2. Achsaufhängung nach Anspruch 1, **dadurch gekennzeichnet, dass** jede Schale (21, 22) mindestens eine erste ebene Innenfläche (23a, 23b) und mindestens eine zweite ebene Innenfläche (24a, 24b) aufweist, wobei die erste und die zweite Innenfläche im Winkel zueinander stehen.

3. Achsaufhängung nach Anspruch 1 oder 2, **dadurch gekennzeichnet, dass** die Schalen (21, 22), in Achsrichtung betrachtet, eine V-förmige Innenkontur mit einem Innenwinkel von 90° oder geringfügig weniger als 90° aufweisen.

4. Achsaufhängung nach Anspruch 2 oder 3, **gekennzeichnet durch** eine im Eckenbereich des Winkels ausgebildete Zahnstruktur (45), welche sich infolge des Anziehens der Zugelemente (33, 34) in das Material des Acliskörpers (3) eingräbt.

5. Achsaufhängung nach einem der vorangehenden Ansprüche, **dadurch gekennzeichnet, dass** der vordere und der hintere Lenkerabschnitt (11) jeweils ein Gussteil sind.

6. Achsaufhängung nach einem der vorangehenden Ansprüche, **dadurch gekennzeichnet, dass** die Zugelemente (33, 34) Bestandteil eines nach Art eines U-Bügels gestalteten Gewindebügels (31) sind, der mit einem Bügelabschnitt (32) um ein an dem einen der beiden Lenkerabschnitte (11, 12) angeordnetes Widerlager (50) herumgeführt ist, wobei sich die Zugelemente (33, 34) parallel zum Verlauf des Achslenkers (10) im Bereich des Achskörpers (3) erstrecken.

7. Achsaufhängung nach Anspruch 6, **dadurch gekennzeichnet, dass** das Widerlager (50) eine von der Ober- und / oder Unterseite des Lenkerabschnitts (11, 12) hervorstehende Nase ist, die mit einer zu der Biegung des Bügelabschnitts (32) korrespondierenden Rille versehen ist.

8. Achsaufhängung nach einem der Ansprüche 1 bis 5, **dadurch gekennzeichnet, dass** die Zugelemente (33, 34) Bestandteil eines mit einem Bügelabschnitt (32) um eine (21) der beiden Schalen herum geführten Gewindebügels (31) sind, und dass die freien Enden der Zugelemente (33, 34) gegen die andere (22) der beiden Schalen verschraubt sind.

9. Achsaufhängung nach Anspruch 8, **dadurch gekennzeichnet, dass** der Gewindebügel (31) längs der Herumführung um die Schale (21) aufeinander folgend mit einer 45°-, einer 90°- und wieder einer 45°-Abknickung versehen ist.

10. Achsaufhängung nach Anspruch 8 oder 9, **dadurch gekennzeichnet, dass** der Gewindebügel (31) außen um die an dem vorderen Lenkerabschnitt (11) angeformte Schale (21) herum geführt ist.

11. Achsaufhängung nach einem Ansprüche 8 bis 10, **dadurch gekennzeichnet, dass** der Gewindebügel (31) längs der Herumführung um die Schale (21) einen abgeflachten Querschnitt aufweist.

12. Achsaufhängung nach Anspruch 8 bis 11, **dadurch gekennzeichnet, dass** der Gewindebügel (31) längs der Herumführung um die Schale (21) in einer Vertiefung (39) sitzt.

13. Achsaufhängung nach einem der vorangehenden Ansprüche, **dadurch gekennzeichnet, dass** die freien Enden der Zugelemente (33, 34) als Gewindeabschnitte ausgebildet sind, auf die Gewindemuttern (35) aufgeschraubt sind, die sich gegen die an dem hinteren Lenkerabschnitt (12) angeformte Schale (22) abstützen.

14. Achsaufhängung nach einem der vorangehenden Ansprüche, **dadurch gekennzeichnet, dass** der vordere Lenkerabschnitt (11) einen zu der Schale (21) hin kontinuierlich zunehmenden Querschnitt aufweist.

## Claims

1. An axle suspension for an air-sprung vehicle axle, with an axle body (3) and axle guides (10) which cross the axle body (3) at the two ends thereof and which are supported with respect to the vehicle, wherein an abutment face (13) for an air spring (14) is formed on the axle guides (10) at the rear in the direction of travel, wherein each axle guide (10) is formed from at least one front guide portion (11) in the direction of travel and at least one rear guide portion (12) in the direction of travel, the two guide portions (11, 12) having formed on them shells (21, 22) of which the inner sides extend in the axial direction in such a way that they rest against a longitudinal portion of the axle body (3), and the guide portions (11, 12) are connected to each other by traction elements (33, 34) which extend transversely to the axle body (3) on two different sides of the axle body and brace the shells (21, 22) against each other with the interposition of the axle body (3), **characterized in that** the bracing of the shells (21, 22) is carried out at an oblique angle (W) to the horizontal, and free ends of the traction elements (33, 34) extend towards the rear and at an angle downwards.

2. An axle suspension according to Claim 1, **characterized in that** each shell (21, 22) has at least one first even inner face (23a, 23b) and at least one second even inner face (24a, 24b), wherein the first and second inner faces are situated at an angle to each other.

3. An axle suspension according to Claim 1 or 2, **characterized in that**, as viewed in the axial direction, the shells (21, 22) have a V-shaped inner contour with an internal angle of 90° or slightly less than 90°.

4. An axle suspension according to Claim 2 or 3, **characterized by** a serrated texture (45) which is formed in the corner area of the angle and which bites into the material of the axle body (3) as a result of the traction elements (33, 34) being tightened.

5. An axle suspension according to any one of the preceding Claims, **characterized in that** the front guide portion and the rear guide portion (11) [*sic*] are a casting in each case.

6. An axle suspension according to any one of the preceding Claims, **characterized in that** the traction elements (33, 34) are part of a threaded yoke (31) which is designed in the manner of a U-shaped yoke and which extends with a yoke portion (32) around an abutment (50) arranged on one of the two guide portions (11, 12), wherein the traction elements (33, 34) extend parallel to the course of the axle guide (10) in the region of the axle body (3).

7. An axle suspension according to Claim 6, **characterized in that** the abutment (50) is a projection, which protrudes from the top side and/or underside of the guide portion (11, 12) and which is provided with a groove corresponding to the bending of the yoke portion (32).

8. An axle suspension according to any one of Claims 1 to 5, **characterized in that** the traction elements (33, 34) are part of a threaded yoke (31) which extends with a yoke portion (32) around one (21) of the two shells, and the two free ends of the traction elements (33, 34) are screwed to the other one (22) of the two shells.

9. An axle suspension according to Claim 8, **characterized in that** the threaded yoke (31) is provided with a 45°, a 90° and once again a 45° bend in succession along the extension around the shell (21).

10. An axle suspension according to Claim 8 or 9, **characterized in that** the threaded yoke (31) extends on the outside around the shell (21) formed integrally on the front guide portion (11).

11. An axle suspension according to any one [of] Claims 8 to 10, **characterized in that** the threaded yoke (31) has a flattened cross-section along the extension around the shell (21).

12. An axle suspension according to Claim[s] 8 to 11, **characterized in that** the threaded yoke (31) is mounted in a depression (39) along the extension around the shell (21).

13. An axle suspension according to any one of the preceding Claims, **characterized in that** the free ends of the traction elements (33, 34) are designed in the form of thread portions onto which are screwed threaded nuts (35) which are supported against the shell (22) formed integrally on the rear guide portion (12).

14. An axle suspension according to any one of the preceding Claims, **characterized in that** the front guide portion (11) has a cross-section which increases in a continuous manner towards the shell (21).

## Revendications

1. Suspension d'essieu pour un essieu de véhicule à ressorts pneumatiques comprenant un corps d'essieu (3) et des guides d'essieu (10) croisant le corps d'essieu (3) à ses deux extrémités, qui sont supportés par rapport au véhicule, et sur lesquels est formée une surface d'appui (13) arrière dans le sens de marche, pour un ressort pneumatique (14), étant entendu que chaque guide d'essieu (10) se compose d'au moins une section de guide avant (11) dans le sens de marche et au moins une section de guide arrière (12) dans le sens de marche, il est formé sur les deux sections de guide (11, 12) des coques (21, 22) dont les côtés intérieurs s'étendent dans la direction de l'essieu de telle sorte qu'ils reposent contre une section longitudinale du corps d'essieu (3) et les sections de guide (11, 12) sont reliées l'une à l'autre par des éléments de traction (33, 34) qui s'étendent transversalement au corps d'essieu sur deux côtés différents du corps d'essieu (3) et calent les coques (21, 22) l'une contre l'autre avec le corps d'essieu (3) en position intermédiaire, **caractérisée en ce que** le calage des coques (21, 22) est réalisé sous un angle oblique (W) par rapport à l'horizontale et les extrémités libres des éléments de traction (33, 34) s'étendent vers l'arrière et en oblique vers le bas.

2. Suspension d'essieu selon la revendication 1, **caractérisée en ce que** chaque coque (21, 22) présente au moins une première surface intérieure plane (23a, 23b) et au moins une deuxième surface intérieure plane (24a, 24b), étant entendu que les première et deuxième surfaces inférieures sont situées dans un angle l'une par rapport à l'autre.

3. Suspension d'essieu selon la revendication 1 ou 2, **caractérisée en ce que** les coques (21, 22), considérées dans la direction de l'essieu, présentent un profil intérieur en forme de V avec un angle intérieur de 90° ou légèrement inférieur à 90°.

4. Suspension d'essieu selon la revendication 2 ou 3, **caractérisée par** une structure dentée (45) réalisée dans la zone de coin de l'angle, qui à la suite de la sollicitation des éléments de traction (33, 34), s'enfonce dans le matériau du corps d'essieu (3).

5. Suspension d'essieu selon l'une des revendications précédentes, **caractérisée en ce que** les sections de guide avant et arrière (11) sont chacune une pièce moulée.

6. Suspension d'essieu selon l'une des revendications précédentes, **caractérisée en ce que** les éléments de traction (33, 34) font partie intégrante d'un arceau fileté (31) réalisé à la manière d'un arceau en U, qui est disposé avec une section d'arceau (32) autour d'une butée (50) agencée sur une des deux sections de guide (11, 12), étant entendu que les éléments de traction (33, 34) s'étendent parallèlement à la forme du guide d'essieu (10) dans la zone du corps d'essieu (3).

7. Suspension d'essieu selon la revendication 6, **caractérisée en ce que** la butée (50) est un tenon faisant saillie depuis le côté supérieur et/ou inférieur de la section de guide (11, 12), qui est muni d'une rainure correspondant à la courbure de la section d'arceau (32).

8. Suspension d'essieu selon l'une des revendications 1 à 5, **caractérisée en ce que** les éléments de traction (33, 34) font partie intégrante d'un arceau fileté (31) disposé avec une section d'arceau (32) autour de l'une (21) des deux coques et **en ce que** les extrémités libres des éléments de traction (33, 34) sont vissées contre l'autre (22) des deux coques.

9. Suspension d'essieu selon la revendication 8, **caractérisée en ce que** l'arceau fileté (31) est muni successivement, le long de sa disposition autour de la coque (21), d'une coudure à 45°, d'une coudure à 90° et à nouveau d'une coudure à 45°.

10. Suspension d'essieu selon la revendication 8 ou 9, **caractérisée en ce que** l'arceau fileté (31) est disposé du côté extérieur autour de la coque (21) formée sur la section de guide avant (11).

11. Suspension d'essieu selon l'une des revendications 8 à 10, **caractérisée en ce que** l'arceau fileté (31) présente une section aplatie le long de sa disposition autour de la coque (21).

12. Suspension d'essieu selon l'une des revendications 8 à 11, **caractérisée en ce que** l'arceau fileté (31) repose dans un enfoncement (39) le long de sa disposition autour de la coque (21).

13. Suspension d'essieu selon l'une des revendications précédentes, **caractérisée en ce que** les extrémités libres des éléments de traction (33, 34) sont réalisées comme sections filetées et vissées sur les écrous filetés (35) qui sont supportés contre la coque (22) formée sur la section de guide arrière (12).

14. Suspension d'essieu selon l'une des revendications précédentes, **caractérisée en ce que** la section de guide avant (11) présente une section augmentant de façon continue en direction de la coque (21).
